Europäisches Patentamt

**European Patent Office**

**Office européen des brevets**

(19)

(11) Numéro de publication : **0 075 525**
**B1**

(12) **FASCICULE DE BREVET EUROPÉEN**

(45) Date de publication du fascicule du brevet :
**17.05.89**

(51) Int. Cl.⁴ : **A 61 C   8/00**

(21) Numéro de dépôt : **82450012.8**

(22) Date de dépôt : **13.09.82**

(54) **Nouveaux implants dentaires.**

(30) Priorité : **16.09.81 FR 8117607**

(43) Date de publication de la demande :
**30.03.83 Bulletin 83/13**

(45) Mention de la délivrance du brevet :
**17.05.89 Bulletin 89/20**

(84) Etats contractants désignés :
**AT BE CH DE GB IT LI LU NL SE**

(56) Documents cités :
**DE–A– 1 958 338**
**DE–A– 2 455 828**
**DE–A– 2 936 690**
**FR–A– 1 110 178**
**FR–A– 2 188 445**
**FR–A– 2 299 009**
**GB–A– 2 003.845**
**US–A– 4 177 562**
**US–A– 4 209 904**
**USINE NOUVELLE, no. 16, 17 avril 1980, pages 147-149; P. LAPERROURAZ: "Composites carbone-carbone: Des fusées...aux prothèses"**

(73) Titulaire : **Lonca, Philippe**
**Centre Commercial LE BARP**
**F-33830 Belin (FR)**

(72) Inventeur : **Lonca, Philippe**
**Centre Commercial LE BARP**
**F-33830 Belin (FR)**

(74) Mandataire : **Thébault, Jean-Louis**
**Cabinet Thébault S.A. 50 Cours de Verdun**
**F-33000 Bordeaux (FR)**

## Description

La présente invention se rapporte à un implant dento-maxillaire comme indiqué dans la première partie de la revendication 1.

L'invention comprend l'application des matériaux composites carbone-carbone à la réalisation d'implants dentaires plus faciles à mettre en place et assurant au patient de meilleures suites post-opératoires.

On connaît déjà les qualités biologiques et biomécaniques, en particulier la compatibilité avec les tissus vivants, des matériaux composites carbone-carbone qui les rendent tout-à-fait aptes à la réalisation de prothèses notamment dentaires comme cela a déjà été proposé.

Dans FR-A-2.299.099, GB-A-2.003.845, DE-A-1.958.338 et dans l'article de Laperrouraz de l'« Usine Nouvelle » N° 16, avril 1980, il est fait mention de l'application des matériaux composites du type carbone-carbone à la réalisation de prothèses dentaires mais ces divers documents, soit ne donnent que de simples indications très générales sans proposer d'exemples de réalisation, soit décrivent des structures d'implants composites, complexes et qui présentent un certain nombre d'inconvénients en ce qui concerne la solidité, la précision, la sécurité post-opératoire et le confort du patient.

Le but de l'invention est de proposer un implant constitué d'un ensemble monobloc réalisé en matériau de type carbone-carbone et susceptible de supprimer les divers inconvénients des implants connus.

Ce but est atteint grâce à un implant possédant les caractéristiques énumérées dans la revendication 1.

On va maintenant décrire des modes de réalisation d'implants selon l'invention en se référant aux dessins annexés sur lesquels :

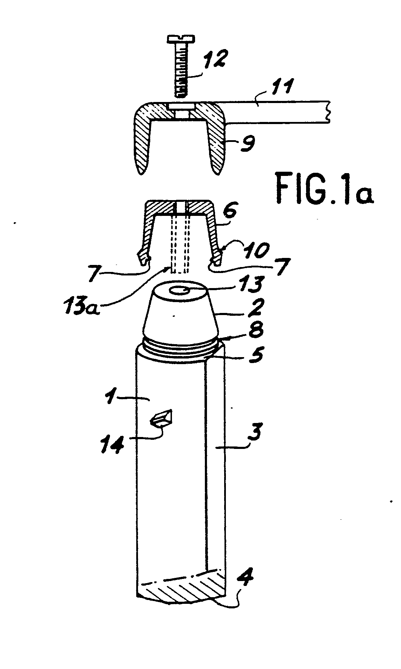

Fig. 1a représente un premier type d'implant selon l'invention, cylindrique, ainsi que diverses pièces annexes destinées au montage indirect d'une prothèse ;

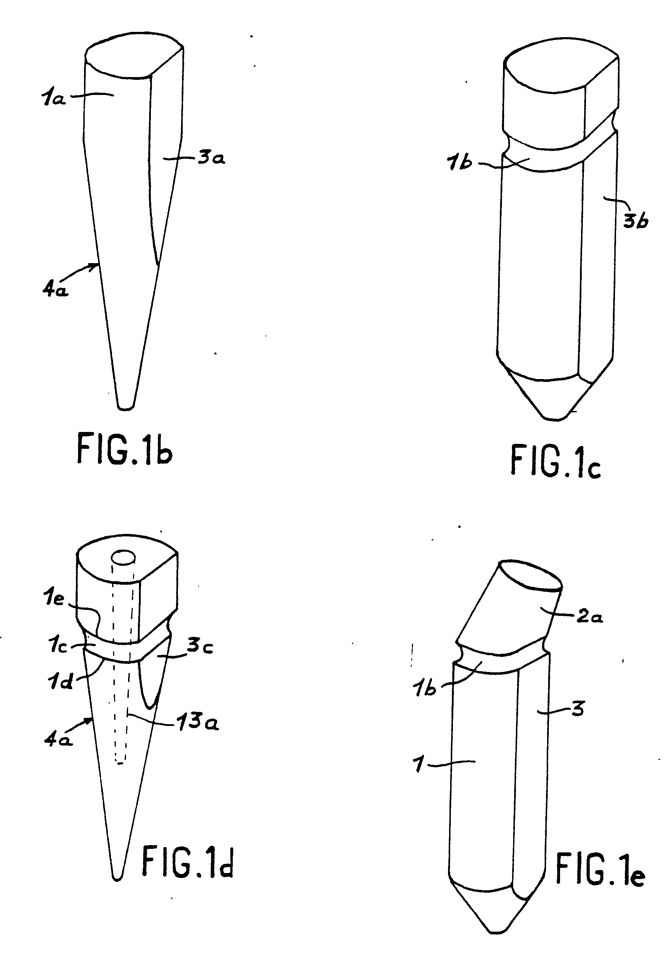

Fig. 1b à 1e illustrent des variantes de réalisation de l'implant de la Fig. 1a.

La Fig. 1a illustre un premier mode de réalisation d'implant conforme à l'invention constitué par un cylindre 1 prolongé à la partie supérieure par une partie tronconique 2 destinée à la fixation d'une prothèse.

L'ensemble est monobloc et réalisé en un matériau composite carbone-carbone constitué par une texture en fibres de carbone et une matrice de liaison inter-fibres également en carbone. Le matériau utilisé comprend plus de 99 % de carbone pur, sa densité est de l'ordre de 1,7 g/cm$^3$ et son module d'élasticité, caractéristique la plus importante, est de 4 000 Kp/mm$^2$ alors que celui de l'os est de 1 500 Kp/mm$^2$.

Les composites carbone-carbone possèdent, en effet, des qualités biologiques et biomécaniques, en particulier la compatibilité avec les tissus vivants, qui les rendent tout à fait aptes à la réalisation d'implants dentaires.

Le cylindre 1 est plein, son diamètre est de 3,5 mm et peut varier bien entendu, de même que sa longueur. Il est pourvu d'un méplat 3 parallèle à l'axe du cylindre et d'une largeur de 1,5 mm dans le mode de réalisation représenté.

La base 4 du cylindre 1 est tronconique et les arêtes sont émoussées.

Le méplat 3 évite l'effet de piston lors de l'insertion de l'implant dans son puits osseux et favorise l'exsudat post-opératoire. Il interdit à terme la rotation de l'implant.

Il est à noter que le cylindre 1 pourrait avoir non pas un méplat mais deux (ou davantage) parallèles à l'axe du cylindre et de même largeur (ou non).

La surface de cet implant est directement au contact de l'os, le tissu conjonctif servant de liaison au tissu osseux et participant ainsi à la fixation de l'implant.

La partie supérieure tronconique 2 est séparée du cylindre 1 par un épaulement 5 servant de butée à un manchon de protection 6 tronconique.

Le manchon 6 se fixe par clipsage sur la partie émergeante 2 de l'implant, grâce à une nervure interne circulaire 7 coopérant avec une rainure complémentaire 8 ménagée à la base de la surface tronconique 2.

Le manchon 6 est chapeauté par une coiffe de révolution 9 dont le rebord inférieur butte contre un épaulement externe 10 ménagé à la base du manchon 6.

La coiffe 9 est reliée à une autre coiffe identique (non représentée) par l'intermédiaire d'une barre de conjonction 11. Le manchon 6, la coiffe 9 et la barre 11 sont en alliage précieux.

La barre est montée amovible grâce à une vis 12 traversant la coiffe 9 et vissée dans le manchon 6, l'extrémité de la vis s'engageant dans un trou borgne 13 lisse ménagé dans l'axe de l'implant.

Le trou 13 peut également, en variante, accueillir une gaine métallique telle que celle représentée en tiretés en 13a. Cette gaine est cylindrique, solidaire du manchon 6 et taraudée intérieurement pour recevoir la vis 12.

L'ensemble 1-2-6-9 sans la barre 11 peut bien entendu accueillir directement une prothèse.

Sur la Fig. 1a, on a représenté également, suivant une variante la réalisation sur le flanc cylindrique de l'implant d'un ergot 14 de clavetage. Celui-ci est constitué par un petit segment de filetage de section triangulaire de 3 mm de longueur environ sur 2 mm de hauteur. Cet ergot 14 est situé dans le tiers supérieur du cylindre 1 et est destiné à se claveter dans un filetage femelle approprié ménagé à cet effet dans la paroi du puits osseux de réception de l'implant afin d'assurer un blocage plus sûr et précis de ce dernier.

Les Fig. 1b à 1e illustrent d'autres variantes de réalisation d'implants à base cylindrique et méplat.

La Fig. 1b représente la partie non-émergée 1a

d'un implant cylindrique pourvu d'un méplat 3a, dont la pointe est effilée en un tronc de cône 4a d'angle très nettement réduit (une vingtaine de degrés) par rapport au tronc de cône 4 (120°) de la Fig. 1e. Dans les deux cas la pointe extrême présente un diamètre de l'ordre de 1,5 mm.

Les Fig. 1c et 1d illustrent un implant cylindrique à méplat (3b, 3c) et gorge à fond arrondi (1b, 1c) séparant la partie non-émergée, destinée à permettre à la gencive d'agripper l'implant et de jouer le rôle d'un joint hermétique. La gorge (1b, 1c) est issue d'un cercle de diamètre 10 mm environ et la distance entre bords de la gorge est de l'ordre de 2,5 mm.

Dans le cas de la Fig. 1d le tronc de cône 4a coupe le cylindre légèrement au-dessus de la gorge 1c dont le rebord inférieur 1d est donc en retrait par rapport au rebord supérieur 1e, le fond de la gorge étant raccordé progressivement à la base de la partie tronconique 4a.

Dans le cas de la Fig. 1d, comme dans celui de la Fig. 1b, l'implant peut comporter un puits central 13a coaxial allant en se rétrécissant en diamètre au fur et à mesure qu'on se rapproche de l'extrémité de la pointe tronconique.

La Fig. 1e illustre un implant cylindrique à méplat 3 et gorge 1b, muni d'un post 2a (partie émergeante) à section circulaire mais dont l'axe est incliné sur l'axe de la partie cylindrique 1 non-émergée.

## Revendications

1. Implant dento-maxillaire constitué d'un ensemble monobloc réalisé en matériau de type carbone-carbone, ledit ensemble monobloc comprenant une partie (1, 4a) destinée à pénétrer dans l'os et une partie (1a, 2, 2a) émergeant de la gencive et susceptible de recevoir directement ou non une prothèse, caractérisé en ce que ledit matériau de type carbone-carbone est formé d'une texture en fibres de carbone et d'une matrice de liaison inter-fibres également en carbone, et en ce que ladite partie (1, 4a) destinée à pénétrer dans l'os est de forme cylindrique ou conique, est munie d'au moins un méplat (3, 3a, 3b, 3c) parallèle à l'axe de ladite partie et est construite de telle façon que sa surface vient en contact directement avec le tissu conjonctif.

2. Implant suivant la revendication 1, caractérisé en ce que ladite partie pénétrant dans l'os est cylindrique (1) et se termine par une partie tronconique (4, 4a) avec des arêtes émoussées, l'angle du tronc de cône variant entre 20° et 120°.

3. Implant suivant la revendication 1 ou 2, caractérisé en ce que la partie pénétrant dans l'os est cylindrique (1) et comporte une saillie ou ergot (14) à section en forme de filetage destiné à claveter l'implant dans son puits osseux cylindrique dont la paroi est aménagée à cet effet.

4. Implant suivant la revendication 1, caractérisé en ce que ladite partie émergente est cylindrique (2a) ou tronconique (2) et la partie non-émergée (1) est terminée par un bout arrondi, les deux parties étant séparées par une gorge circulaire (1b, 1c) à courbure arrondie.

5. Implant suivant l'une des revendications 1 à 4, caractérisé en ce que l'axe de la partie émergée (2) est incliné par rapport à l'axe général de l'implant.

## Claims

1. Dento-maxilliary implant consisting of a single block formed from a material of the carbon-carbon type, the said single block comprising one part (1, 4a) intended to penetrate into the bone and one part (1a, 2, 2a) which protrudes from the gum and which can accommodate, either directly or indirectly a prosthesis, characterised in that the said material of the carbon-carbon type is formed from a structure of carbon fibres and a matrix linking between the fibres which is also formed from carbon, and that the said part (1, 4a) which is intended to penetrate into the bone is cylindrical or conical in shape, is equipped with at least one flat surface (3, 3a, 3b, 3c) parallel to the axis of the said part and is formed in such a manner that the surface comes into direct contact with the connective tissue.

2. Implant as claimed in claim 1, characterised in that the said part which penetrates into the bone is cylindrical (1) and ends in a truncated cone part (4, 4a) with smooth edges, the angle of this cone part varying between 20° and 120°.

3. Implant as claimed in claim 1 or 2, characterised in that the part which penetrates into the bone is cylindrical (1) and comprises a threaded projection or pin (14) which is intended to wedge the implant into the cylindrical drill hole in the bone, the walls of which are shaped for this purpose.

4. Implant as claimed in claim 1, characterised in that the said part which protrudes from the bone is cylindrical (2a) or truncated conical (2) and the part which does not protrude (1) has a rounded end, the two parts being separated by a circular groove (1b, 1c) with rounded edges.

5. Implant as claimed in any of the claims 1 to 4, characterised in that the axis of the protruding part (2) is at an angle to the axis of the implant itself.

## Patentansprüche

1. Dentales Kieferimplantat gebildet aus einem einstückigen Ganzen realisiert aus einem Material vom Typ Kohlenstoff-Kohlenstoff, wobei das besagte einstückige Ganze einen Abschnitt (1, 4a), der dazu bestimmt ist, in den Knochen einzudringen, und einen Abschnitt (1a, 2, 2a) umfaßt, der aus dem Zahnfleisch herausragt und fähig ist, eine Prothese direkt oder indirekt aufzunehmen, dadurch gekennzeichnet, daß das besagte Material vom Typ Kohlenstoff-Kohlenstoff aus einer Textur aus Kohlenstoffasern und einer ebenfalls aus Kohlenstoff bestehenden Matrix zur Verbindung zwischen den Fasern besteht und daß der besagte Abschnitt (1, 4a), der dazu bestimmt ist, in den Knochen einzudringen, zylindrische oder konische Form besitzt, mit wenigstens einer Abflachung (3, 3a, 3b, 3c) parallel zur Achse des besagten Abschnitts versehen und derart ausgebildet ist, daß seine Oberfläche direkt mit dem Bindegewebe in Berührung gelangt.

2. Implantat gemäß Anspruch 1, dadurch gekennzeichnet, daß der besagte Abschnitt, der in den Knochen eindringt, zylindrisch (1) ist und in einem kegelstumpfförmigen Abschnitt (4, 4a) mit stumpfen Kanten endet, wobei der Konuswinkel zwischen 20° und 120° variiert.

3. Implantat gemäß Anspruch 1 oder 2, dadurch gekennzeichnet, daß der Abschnitt, der in den Knochen eindringt, zylindrisch ist und einen Vorsprung oder eine Nase (14) mit einem Schnitt in Form eines Gewindeschneiders umfaßt, der bzw. die dazu bestimmt ist, das Implantat in seinem zylindrischen Knochenloch zu verkeilen, dessen Wandung für die Wirkung eingerichtet ist.

4. Implantat gemäß Anspruch 1, dadurch gekennzeichnet, daß der besagte herausragende Abschnitt zylindrisch (2a) oder kegelstumpfförmig (2) ist und der nicht herausragende Abschnitt (1) in einem abgerundeten Ende endet, wobei die beiden Abschnitte durch eine umlaufende Kehle (1b, 1c) mit gerundeter Wölbung getrennt sind.

5. Implantat gemäß einem der Ansprüche 1 bis 4, dadurch gekennzeichnet, daß die Achse des herausragenden Abschnitts (2) in Bezug zur Hauptachse des Implantats geneigt ist.

FIG.1a

FIG.1b

FIG.1c

FIG.1d

FIG.1e